# EUROPÄISCHE PATENTSCHRIFT

(11) **EP 1 010 989 B1**
(45) Veröffentlichungstag und Bekanntmachung des Hinweises auf die Patenterteilung: **01.03.2006**
(21) Anmeldenummer: 99121928.8
(22) Anmeldetag: 08.11.1999
(51) Int. Cl.: G01S 13/93, G01S 7/40

(54) **Verfahren zur Überwachung von mehrkanaligen Abstandsmesssystemen für Fahrzeuge**
Method and apparatus for monitoring multi-channel distance measurement systems in vehicles
Méthode et appareil de surveillance de systèmes télémètriques multi-chaines pour véhicules

(30) Priorität: 07.12.1998 DE 19856313
(43) Veröffentlichungstag der Anmeldung: 21.06.2000
(73) Patentinhaber: Volkswagen Aktiengesellschaft, 38436 Wolfsburg (DE)
(72) Erfinder: Andreas, Peter, Dipl.-Ing., 38518 Gifhorn (DE); Bäker, Wolfgang, 38114 Braunschweig (DE); Ruchatz, Thomas, Dipl.-Ing., 38165 Lehre (DE)

(56) Entgegenhaltungen:
- EP-A- 0 544 468
- EP-A- 0 860 714
- DE-A- 4 108 417
- GB-A- 2 131 642
- US-A- 5 045 856
- US-A- 5 463 384
- US-A- 5 531 118

## Beschreibung

Die Erfindung betrifft ein Verfahren zur laufenden Überwachung und Prüfung der Funktion von mehrkanaligen Abstandsmeßsystemen für Fahrzeuge.

Vorrichtungen und Verfahren zur Messung des Abstandes von stehenden oder bewegten Hindemissen relativ zu einem Fahrzeug sind bekannt. Sie werden beispielsweise zur Überwachung des sog. toten Winkels (US 5,463,384) oder bei der adaptiven Geschwindigkeitsregelung (EP 981 00 619.0), bei der der Abstand zu einem vorausfahrenden Fahrzeug ggf. abhängig von der Geschwindigkeit geregelt wird, eingesetzt. Sie arbeiten nach dem Laufzeitprinzip und wenden Radar-, Laser- oder Ultraschallsignale an. Dabei wird eine Vielzahl relativ scharf fokussierter Strahlenbündel in verschiedene Richtungen ausgesandt und die Echosignale entsprechend in mehreren Meßkanälen ausgewertet, um einen möglichst großen Bereich des Umfeldes zu erfassen und Information über die Größe und Position des Hindernisses zu gewinnen (siehe auch US 5 045 856).

Bei solchen mehrkanaligen Abstandsmeßsystemen kann es vorkommen, daß ein einzelner Meßkanal in seinem Meßergebnis soweit abweicht, daß die Abstandsregelung widersprüchliche Eingangsinformationen erhält und nicht ordnungsgemäß funktionieren kann. Es ist bekannt, die Funktionsfähigkeit von Sensorsystemen mittels besonderer Prüfmittel bei Inbetriebnahme zu testen. Aus DE 41 08 417 C2 ist auch bekannt, die Betätigung eines Brems- oder Fahrpedals durch wenigstens zwei unabhängig voneinander wirkende Sensoren zu erfassen, deren Signale gezählt und die Zählwerte miteinander verglichen werden, wobei eine Fehlermeldung erzeugt wird, wenn eine unplausible Differenz zwischen diesen Zählwerten auftritt.

Aufgabe der Erfindung ist es, ein Verfahren anzugeben, mit dem sich während des Betriebs nicht tolerierbare Abweichungen einzelner Meßkanäle in einem mehrkanaligen Abstandsmeßsystem mit einer Vielzahl von Radar-, Ucht- oder Ultraschallstrahlenbündeln erkennen lassen.

Diese Aufgabe wird durch ein Verfahren nach dem Hauptanspruch gelöst.

Im allgemeinen wird ein in einer bestimmten Entfernung vom Abstandsmeßsystem befindliches Objekt, beispielsweise ein vorausfahrendes zweispuriges Fahrzeug, von mehreren Meßstrahlenbündeln erfaßt. Da der Richtungsunterschied räumlich benachbarter Meßstrahlenbündel gering, typisch etwa 1 Grad, ist, sind die geometrisch bedingten Unterschiede in den längs der Meßstrahlenbündel gemessenen Abstände bei korrekter Funktion der Meßkanäle ebenfalls gering. Ein beim Vergleich erkannter signifikanter Unterschied in den gemessenen Abständen weist also auf eine mögliche Fehlfunktion wenigstens eines der verglichenen Meßkanäle hin.

Bevorzugt werden die Abstandswerte von mindestens drei räumlich benachbarten Meßstrahlenbündeln zugeordneten Meßkanäle miteinander verglichen. Wenn der von einem Meßkanal gemessene Abstand signifikant von denen der anderen abweicht, weist dies auf eine Fehlfunktion hin.

Unterschiede in den gemessenen Abstandswerten können auch dadurch auftreten, daß von einzelnen am Vergleich beteiligten Meßstrahlenbündeln ein anderes Objekt oder gar kein Objekt erfaßt wird. Es ist daher bevorzugt, das Ergebnis des Vergleichs einer Plausibilitätsprüfung zu unterziehen, bevor eine Fehlermeldung erzeugt wird. Dabei können auch andere Zustände, die nicht auf einen defekten Meßkanal zurückzuführen sind, erkannt werden.

Ergibt sich beim Vergleich von mindestens drei Meßkanälen, daß mindestens zwei davon ein Objekt in einem bestimmten Abstand anzeigen, dann gibt es erfahrungsgemäß Abstandsbereiche, in denen kein weiteres Objekt vorhanden sein kann. Vorteilhaft wird die Plausibilitätsprüfung so durchgeführt, daß Differenzen, die solchen Bereichen entsprechen, als unplausibel angesehen werden und eine Fehlermeldung erzeugen.

Erfindungsgemäß wird der Vergleich der Abstandswerte während des Betriebs des Abstandsmeßsystems laufend wiederholt. Es kann vorkommen, daß ein Objekt, beispielsweise ein einspuriges Fahrzeug, bei einem einzelnen Vergleich nur von einem Meßkanal erfaßt wird. In diesem Fall könnte die Plausibilitätsprüfung zu einer Fehlermeldung führen, wenn die räumlich benachbarten Meßstrahlenbündel ein anderes Objekt erfassen. In der Praxis ändert sich jedoch die relative Position eines schmalen Objekts im Laufe der Zeit, so daß es nacheinander in verschiedenen Meßkanälen erfaßt wird. Daher werden bevorzugt die bei einer einzelnen Fehlermeldung beteiligten Meßkanäle zunächst intern registriert und erst dann eine Fehleranzeige veranlaßt, wenn die Häufigkeit, mit der ein bestimmter Meßkanal registriert wird, einen vorgegebenen Schwellenwert überschreitet. Dieser Schwellenwert kann vorteilhaft auch abhängig von den Betriebsbedingungen, z. B. von der Geschwindigkeit, festgelegt werden.

Die Erfindung ermöglicht es, nicht tolerierbare Abweichungen einzelner Meßkanäle bei der Abstandsmessung mit einem mehrkanaligen Abstandsmeßsystem während des Betriebs zu erkennen. Sicherheitsrisiken werden vermieden, wie sie beispielsweise auftreten können, wenn ein schmales Objekt von nur einem Meßkanal erfaßt wird und dieser fehlerhaft mißt. Eine besondere Prüfroutine unter Einsatz spezieller Prüfmittel, beispielsweise vor Inbetriebsetzung oder in ggf. störender Weise während des Betriebs in Intervallen, ist entbehrlich.

Die Erfindung wird anhand des folgenden Ausführungsbeispiels näher erläutert. Es zeigen
- Fig. 1:: das erfindungsgemäße Verfahren bei der Abstandsmessung eines mehrspurigen Fahrzeugs und
- Fig. 2:: das erfindungsgemäße Verfahren bei der Abstandsmessung eines einspurigen Fahrzeugs.

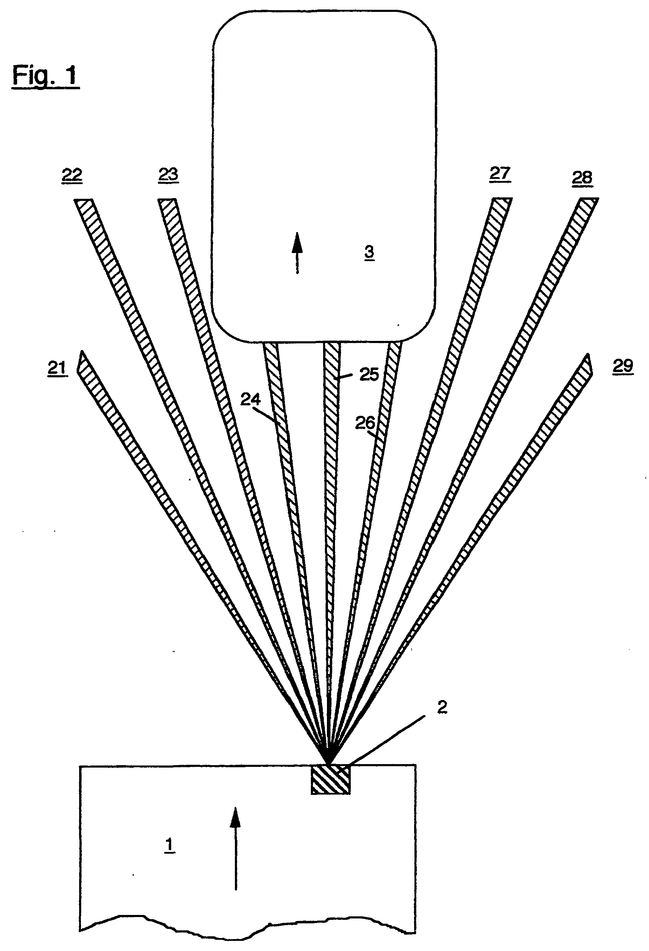

Das in Fig. 1 gezeigte Fahrzeug 1 ist an seiner Vorderseite mit einem mehrkanaligen Abstandsmeßsystem 2 ausgerüstet und bewegt sich in Pfeilrichtung. Das Abstandsmeßsystem sendet eine Vielzahl schmaler Meßstrahlenbündel aus, von.denen hier neun mit 21 bis 29 bezeichnete Bündel gezeigt sind. Die einzelnen Bündel sind in bekannter Weise unterscheidbar codiert, so daß ihre Echosignale vom Empfänger einzelnen Meßkanälen zugeleitet werden können. Ein anderes zweispuriges Fahrzeug 3 bewegt sich in gleicher Richtung mit einer durch den kürzeren Pfeil angedeuteten geringeren Geschwindigkeit. Dieses Fahrzeug ist schmaler dargestellt, da die tatsächliche Entfernung nicht maßstabsgerecht wiedergegeben werden kann. Zum dargestellten Zeitpunkt wird das Fahrzeug 3 von den einander benachbarten Meßstrahlenbündeln 24, 25 und 26 getroffen. Bei korrekter Funktion aller Meßkanäle melden die zu den Meßstrahlenbündeln 24, 25 und 26 gehörenden Meßkanäle 24', 25' und 26' annähernd gleiche Abstände von beispielsweise 50 m, während keine Echos der übrigen Bündel registriert werden. In der Auswerteeinheit des Abstandsmeßsystems werden laufend die in jeweils drei benachbarten Meßkanälen gemessenen Abstandswerte miteinander verglichen und einer Plausibilitätsprüfung unterzogen. Dabei wird als plausibel angesehen, wenn die Abstandswerte entweder in allen drei Kanälen gleich sind oder wenn zwei gleich sind und der abweichende Wert zu einem außenliegenden Meßstrahlenbündel gehört. Unplausibel ist, wenn alle drei Werte verschieden sind. In diesem Fall werden die Nummern der am Vergleich beteiligten Meßkanäle registriert. Auch wenn, bei zwei gleichen Werten, das zum abweichenden Wert gehörende Meßstrahlenbündel zwischen den beiden anderen liegt, ist dies unplausibel und die Nummer des abweichenden Meßkanals wird ebenfalls registriert.

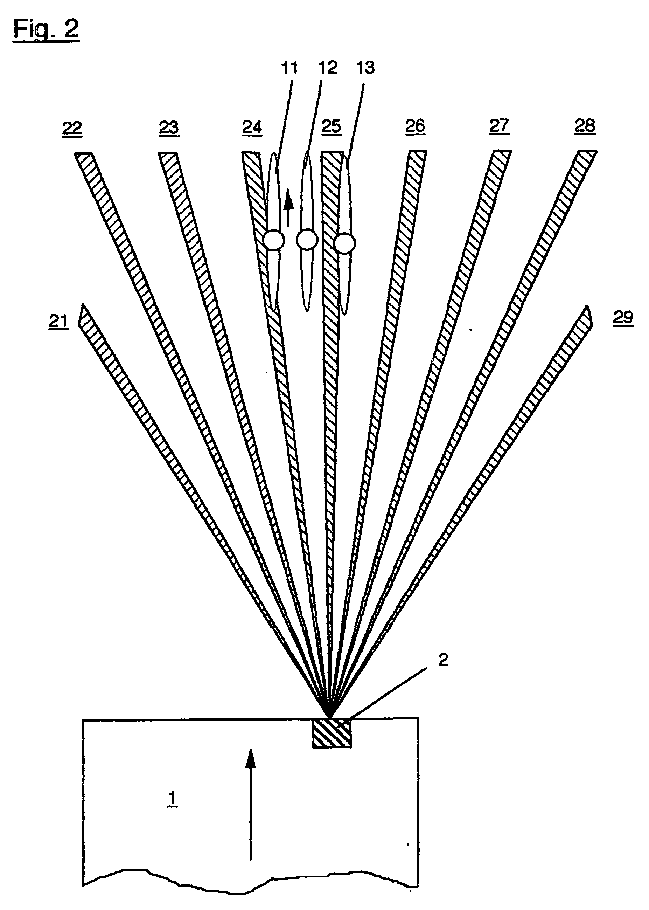

In Fig. 2 ist das gleiche Fahrzeug 1 mit dem Abstandsmeßsystem 2 in einer Situation mit einem einspurigen Fahrzeug, etwa einem Kraftrad, dargestellt, das sich in verschiedenen Positionen 11, 12 und 13 relativ zum Fahrzeug 1 befinden kann. Diese Positionen können sich nacheinander aus den lateralen Abweichungen beider Fahrzeuge vom Geradeauskurs ergeben; insbesondere treten solche Abweichungen aber beim einspurigen Fahrzeug auf. In Position 11 würde der Meßkanal 24' beim Vergleich mit 23' und 25' als unplausibel registriert werden; entsprechend in Position 13 der Meßkanal 25' beim Vergleich mit 24' und 26'. Dagegen würde das einspurige Fahrzeug in Position 12 überhaupt nicht gemessen.

Die Abstandsmessungen werden nun in kurzen Zeitabständen laufend wiederholt. Dadurch wird zunächst vermieden, daß ein einspuriges Fahrzeug unbemerkt bleibt, denn dieses wird die relative Position 12 nicht lange beibehalten sondern nach 11 oder 13 wandern. Auch die Plausbilitätsprüfungen werden wiederholt. Dabei werden defekte Meßkanäle häufiger registriert als andere. Zeigt beispielsweise der Meßkanal 25' den falschen Wert 30 m, dann wird er sowohl beim Vergleich 23'/24'/25' als auch bei 24'/25'/26' und 25'/26'/27', also insgesamt dreimal, die anderen aber nur je einmal registriert. Bei der Messung eines einspurigen Fahrzeugs tritt eine solche Häufung für einen Meßkanal nicht auf, da es nacheinander von verschiedenen Meßstrahlenbündeln erfaßt wird.

Für die Registrierung ist jedem Meßkanal ein Additionsregister zugeordnet. Die Inhalte der Register werden ständig mit einem gespeicherten Schwellenwert verglichen und nach einer bestimmten Zeit oder Wegstrecke gelöscht. Wenn der Inhalt eines Registers den Schwellenwert überschreitet, wird dem Fahrer mittels einer Signallampe eine Fehlermeldung angezeigt, so daß er zur manuellen Abstandsregelung übergehen kann.

### BEZUGSZEICHENLISTE

- 1: Fahrzeug
- 2: Abstandsmeßsystem
- 3: Fahrzeug
- 11-13: Fahrzeugposition
- 21-29: Meßstrahlen
- 21'-27': Meßkanal

## Patentansprüche

1. Verfahren zur Überwachung eines mehrkanaligen Abstandsmeßsystems für Fahrzeuge, bei dem von einem Abstandssensor mehrere Sensorstrahlenbündel in räumlich unterschiedliche Richtungen ausgesendet werden und von dem Abstandssensor die von einem Hindernis rückgestreuten Sensorsignale erfaßt und in getrennten Meßkanälen als Abstandswerte gemessen werden, wobei die von räumlich benachbarten Strahlenbündeln gemessenen Abstandswerte wiederholt miteinander verglichen werden, **dadurch gekennzeichnet, daß** das Vergleichen der gemessenen Abstandswerte der räumlich benachbarten Strahlenbündel eine Plausibilitätsprüfung für die Differenzen der gemessenen Abstandswerte umfaßt und bei Unplausibilität ein Fehlersignal erzeugt wird.

2. Verfahren nach Anspruch 1, **dadurch gekennzeichnet, daß** die Abstandswerte von mindestens drei räumlich benachbarten Strahlen verglichen werden.

3. Verfahren nach Anspruch 1 oder 2, **dadurch gekennzeichnet, daß** ein Fehlersignal erzeugt wird, wenn die Differenzen der Abstandswerte innerhalb vorgegebener Intervalle liegen.

4. Verfahren nach Anspruch 1, 2 oder 3, **dadurch gekennzeichnet, daß** die beim Vergleich beteiligten Meßkanäle registriert werden, wenn die Differenzen der Abstandswerte unplausibel sind und eine Fehleranzeige erzeugt wird, wenn ein Meßkanal mit einer einen vorgegebenen Schwellenwert übersteigenden Häufigkeit registriert wird.

5. Verfahren nach Anspruch 4, **dadurch gekennzeichnet, daß** der Schwellenwert abhängig von den Betriebsbedingungen festgelegt wird.

## Claims

1. Method for monitoring a multi-channel distance measurement system for vehicles, in the case of which a number of sensor beams are emitted by a distance sensor in spatially different directions, and sensor signals backscattered by an obstacle, are picked up by the distance sensor and measured as distance values in separate measurement channels, the distance values measured by spatially adjacent beams being repeatedly compared with one another, **characterized in that** the comparison of the measured distance values of the spatially adjacent beams comprises a plausibility test for the differences of the measured distance values, and an error signal is generated in the event of implausibility.

2. Method according to Claim 1, **characterized in that** the distance values of at least three spatially adjacent beams are compared.

3. Method according to Claim 1 or 2, **characterized in that** an error signal is generated when the differences of the distance values are within prescribed intervals.

4. Method according to Claim 1, 2 or 3, **characterized in that** the measurement channels participating in the comparison are registered when the differences of the distance values are implausible, and an error display is produced when a measurement channel is registered as having a frequency exceeding a prescribed threshold value.

5. Method according to Claim 4, **characterized in that** the threshold value is fixed as a function of the operating conditions.

## Revendications

1. Procédé de surveillance d'un système télémétrique multicanaux pour des véhicules, selon lequel plusieurs faisceaux de rayons de détecteur sont émis par un détecteur de distance dans des directions spatialement différentes et les signaux de détecteur réfléchis par un obstacle sont détectés par le détecteur de distance et mesurés comme valeurs de distance dans des canaux de mesure séparés, sachant que les valeurs de distance mesurées par des faisceaux de rayons spatialement voisins sont comparées entre elles de manière répétitive, **caractérisé en ce que** la comparaison des valeurs de distance mesurées des faisceaux de rayons spatialement voisins comprend un contrôle de vraisemblance pour les différences des valeurs de distance mesurées, et un signal d'erreur est produit en cas d'invraisemblance.

2. Procédé selon la revendication 1, **caractérisé en ce qu'**on compare les valeurs de distance d'au moins trois rayons spatialement voisins.

3. Procédé selon la revendication 1 ou 2, **caractérisé en ce qu'**un signal d'erreur est produit si les différences des valeurs de distance se situent à l'intérieur d'intervalles prédéfinis.

4. Procédé selon la revendication 1, 2 ou 3, **caractérisé en ce que** les canaux de mesure participant à la comparaison sont enregistrés si les différences des valeurs de mesure sont invraisemblables, et un affichage d'erreur est produit si un canal de mesure est enregistré avec une fréquence dépassant une valeur de seuil prédéfinie.

5. Procédé selon la revendication 4, **caractérisé en ce que** la valeur de seuil est définie en fonction des conditions d'utilisation.
